# EUROPÄISCHE PATENTSCHRIFT

(11) **EP 4 396 017 B1**
(45) Veröffentlichungstag und Bekanntmachung des Hinweises auf die Patenterteilung: **20.05.2026**
(21) Anmeldenummer: 22761199.3
(22) Anmeldetag: 05.08.2022
(51) Int. Cl.: B60K 35/22, B60K 35/28, B60K 35/29, B60K 35/65, B60K 35/81

(54) **VERFAHREN ZUM EINSTELLEN EINES BILDSCHIRMS**
METHOD FOR ADJUSTING A SCREEN
PROCÉDÉ DE RÉGLAGE D'UN ÉCRAN

(30) Priorität: 31.08.2021 DE 102021122465
(43) Veröffentlichungstag der Anmeldung: 10.07.2024
(73) Patentinhaber: AUDI AG, 85057 Ingolstadt (DE)
(72) Erfinder: MÜLLER, Ulrich, 85055 Ingolstadt (DE); MOLL, Tobias, 85055 Ingolstadt (DE)
(74) Vertreter: RDL Patentanwälte PartG mbB
(86) Internationale Anmeldenummer: PCT/EP2022/072069
(87) Internationale Veröffentlichungsnummer: WO 2023/030827

(56) Entgegenhaltungen:
- WO-A1-2013/104377
- DE-A1- 102019 005 193
- FR-A3- 3 016 722
- US-A1- 2008 129 684
- US-A1- 2021 063 783

## Beschreibung

Die Erfindung betrifft ein Verfahren zum Einstellen eines Bildschirms eines Fahrzeugs und ein System zum Einstellen eines Bildschirms eines Fahrzeugs.

Eine Bedienvorrichtung eines Fahrzeugs für einen Fahrer und einen Beifahrer, welchen jeweils unterschiedliche bedienbare Fahrzeugfunktionen zugeordnet sind, ist aus der Druckschrift EP 2 675 649 B1 bekannt.

Die Druckschrift DE 10 2005 035 111 A1 beschreibt ein Bedien- und Anzeigesystem für ein Fahrzeug mit einem Fahrer und einem Beifahrer, die eine zentrale Anzeigeeinheit aus jeweils einem unterschiedlichen Betrachtungswinkel nutzen.

Eine Anzeigevorrichtung eines Kraftfahrzeugs mit einer Anzeigefläche, die gemeinsam durch einen Fahrer und einen Beifahrer nutzbar ist, ist in der Druckschrift US 2007/0129864 A1 beschrieben.

Die Druckschrift FR 3016722 A3 beschreibt einen Anzeigebildschirm, der in einem Kraftfahrzeug vor einem Beifahrersitz angeordnet ist, wobei ein Sichtfeld des Anzeigebildschirm für einen Fahrersitz entweder geöffnet oder geschlossen wird.

Ein Filter für ein Beifahrerdisplay ist aus der Druckschrift DE 10 2019 005 193 A1 bekannt.

Ein Anzeigesystem und ein Verfahren zum Steuern einer Mehrfachansichtsanzeige in einem Fahrzeug sind aus der Druckschrift US 2008/129684 A1 bekannt.

Die Druckschrift US 2021/063783 A1 beschreibt eine Vorrichtung zum Steuern einer Beifahrersitzanzeige vor einem Beifahrersitz.

Vor diesem Hintergrund war es eine Aufgabe, einen Bildschirm in einem Fahrzeug für einen Fahrer und Beifahrer geeignet einzustellen.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Einstellen eines Bildschirms eines Fahrzeugs, bspw. eines Kraftfahrzeugs, vorgesehen, wobei der Bildschirm für einen Beifahrer des Fahrzeugs vorgesehen und bspw. als Beifahrerbildschirm ausgebildet und/oder zu bezeichnen ist. Dabei wird bzw. ist ursprünglich vorgesehen, dass auf dem Bildschirm mindestens ein Anzeigeelement dargestellt wird, werden soll und/oder darzustellen ist, wobei zunächst das mindestens eine ursprünglich vorgesehene Anzeigeelement analysiert bzw. untersucht, bspw. überprüft, wird, wobei ermittelt wird, ob das mindestens eine ursprünglich vorgesehene Anzeigeelement, bspw. unter mehreren Anzeigeelementen, nur an den Beifahrer adressiert bzw. gerichtet und demnach nur für den Beifahrer vorgesehen ist bzw. wird. Dabei wird für das mindestens eine nur für den Beifahrer vorgesehene Anzeigeelement aus einer Perspektive des Fahrers auf dem bzw. mit dem Bildschirm ersatzweise mindestens ein statisches Anzeigeelement dargestellt, das von dem ursprünglich zur Darstellung vorgesehenen Anzeigeelement abweicht. Dabei wird analysiert mit welchem softwaregestützten Programm das mindestens eine ursprüngliche Anzeigeelement mit einem hierfür vorgesehenen Anzeigeinhalt dargestellt wird und ob dieses Programm hinsichtlich seiner Funktion zum Darstellen von privaten Anzeigeinhalten ausgebildet ist. Dabei wird aufgrund des Programms entschieden, ob dieser mindestens eine ursprüngliche Anzeigeinhalt nur für den Beifahrer allein vorgesehen ist.

Weiterhin wird das mindestens eine nur für den Beifahrer vorgesehene Anzeigeelement für den Beifahrer unverändert dargestellt.

Dabei wird zunächst für den mindestens einen ursprünglich vorgesehenen Anzeigeinhalt bzw. einen entsprechenden Bildinhalt, überprüft, ob dieser statisch oder dynamisch ist und bspw. ein Video umfasst, wobei ein dynamischer Anzeigeinhalt in seiner ursprünglichen Darstellung nur dem Beifahrer gezeigt wird. Dieser dynamische Anzeigeinhalt wird dagegen für den Fahrer ersetzt. Ein ursprünglich statischer Anzeigeinhalt wird sowohl dem Beifahrer als auch dem Fahrer in seiner ursprünglichen Darstellung gezeigt. Alternativ oder ergänzend wird der mindestens eine ursprünglich vorgesehene Anzeigeinhalt hinsichtlich seiner Verwendung analysiert, wobei in der Regel bezüglich des Anzeigeinhalts überprüft wird, ob er nur für den Beifahrer und nicht für den Fahrer vorgesehen ist bzw. wird, wobei dieser Anzeigeinhalt für den Fahrer ersetzt wird. Falls ein derartiger Anzeigeinhalt sowohl für den Fahrer als auch für den Beifahrer vorgesehen, bspw. geeignet ist, wird er für den Fahrer und den Beifahrer in seiner ursprünglichen Darstellung gezeigt. Als statischer Anzeigeinhalt kann dem Fahrer eine monochrome, bspw. weiße oder schwarze, Fläche, eine unterschiedlich gefärbte bzw. bunte Fläche oder ein Bild ersatzweise dargestellt bzw. gezeigt werden. Dabei ist es möglich, dass für den Beifahrer ein Privacy Modus bzw. Privatmodus und somit ein Blickschutz gegenüber dem Fahrer eingestellt wird.

In Ausgestaltung wird das mindestens eine ursprüngliche Anzeigeelement fensterbasiert und/oder grafikbasiert analysiert, wobei es möglich ist, dass das mindestens eine ursprünglich dynamische Anzeigeelement grafikbasiert und/oder fensterbasiert erkannt wird.

In der Regel wird das mindestens eine Anzeigeelement, das ursprünglich nur für den Beifahrer vorgesehen ist bzw. wird, und für das ein definierter Anzeigeinhalt verwendet und/oder vorgesehen wird, unabhängig davon, ob es ursprünglich dynamisch oder statisch dargestellt wird, dem Beifahrer wie ursprünglich vorgesehen, dargestellt. Dagegen wird dem Fahrer nur ein alternatives statisches Anzeigeelement dargestellt, das sich von einem ursprünglich statischen Anzeigeelement, das nur für den Beifahrer vorgesehen ist bzw. wird, unterscheidet.

Das mindestens eine ursprünglich vorgesehene Anzeigeelement wird von einer Recheneinheit hinsichtlich seiner Beschaffenheit analysiert, noch bevor es auf dem Bildschirm dargestellt bzw. angezeigt wird. Falls es für den Fahrer nicht geeignet und/oder vorgesehen ist, wird für dieses mindestens eine Anzeigeelement ein Privatmodus aktiviert, wobei es aus der Perspektive des Fahrers auf dem Bildschirm durch das alternative Anzeigeelement ersetzt wird.

In weiterer Ausgestaltung wird, bspw. beim Analysieren und/oder Darstellen des mindestens einen Anzeigeelements, eine Fahrsituation des Fahrzeugs berücksichtigt. Falls das Fahrzeug fährt, wird dem Fahrer statt dem dynamischen Anzeigeelement ersatzweise das statische Anzeigeelement dargestellt. Falls das Fahrzeug steht, kann dem Fahrer auch das ursprünglich dynamische Anzeigeelement unverändert dargestellt werden. Statt einem Anzeigeelement, das nur für den Beifahrer vorgesehen ist, wird dem Fahrer ersatzweise ein alternatives statisches Anzeigeelement dargestellt, was unabhängig davon ist, ob das Fahrzeug fährt oder steht. Dabei kann auch ein persönliches Verhältnis des Beifahrers zu dem Fahrer berücksichtigt werden, also ob sie derselben Familie angehören, befreundet sind oder einander fremd sind, wenn der Beifahrer bspw. in einem Taxi als Fahrzeug neben einem ihm fremden Taxifahrer als Fahrer sitzt. Falls der Fahrer und der Beifahrer bspw. befreundet sind oder derselben Familie angehören, wird weiterhin untersucht, ob der Fahrer ein Anzeigeelement abhängig von seinem Anzeigeinhalt bzw. Bildinhalt auch dem Fahrer dargestellt werden kann bzw. darf oder nicht. Falls der Fahrer und der Beifahrer einander fremd sind, wird das nur für den Beifahrer vorgesehene Anzeigeelement auch nur dem Beifahrer in seiner ursprünglichen Darstellung gezeigt. Dies ist bspw. auch bei einem Car-Sharing möglich, wenn das Fahrzeug abwechselnd von unterschiedlichen Fahrern genutzt wird. Dabei können unterschiedliche definierbare Kategorien für Privatmodi und/oder Privatsphären berücksichtigt werden, die bspw. in einer Datenbank hinterlegt sind und festlegen, welche Art von Anzeigeinhalt nur für den Beifahrer, jedoch nicht für den Fahrer vorgesehen ist, wobei diese Kategorien aus der Datenbank abrufbar sind und die Recheneinheit auf diese zugreift.

Der gesamte Anzeigeinhalt des Bildschirms bzw. Displays wird von der Recheneinheit erzeugt. Dabei können auf dem Bildschirm abhängig von einer Nutzung unterschiedliche Anwendungen sichtbar sein. Dabei kann eine Anwendung als statischer Anzeigeinhalt bzw. als statisches Anzeigeelement z. B. Navigationsdaten, Informationen, bspw. Medien-Informationen, Radio-Anzeigen, Wetterdaten usw. umfassen. Weiterhin kann ein beweglicher Anzeigeinhalt bzw. ein bewegtes Anzeigeelement auf Wunsch des Beifahrers angezeigt werden. Hierbei kann es sich um unterschiedliche Applikationen (Apps) als Anwendungen handeln, wie z.B. YouTube, Snapchat, Instagram oder dynamische Web-Seiten. Außerdem sind Streaming-Inhalte wie Netflix, Amazon Prime oder andere Streaming Dienste als bewegliche Anzeigeinhalte denkbar. Viele der Anwendungen und damit darstellbare Anzeigeinhalte umfassen bewegte Bereiche als Anzeigeelemente, z. B. bei YouTube ein aktiv laufendes Video, und statische Bereiche als Anzeigeelemente, bspw. einen Vorschaubereich oder Navigationsbereich. Die Recheneinheit entscheidet, welche ursprünglichen Anzeigeelemente den Fahrer ablenken können und ersetzt diese mit anderen Anzeigeelementen, die nur für den Fahrer sichtbar sind. Ein jeweiliges alternatives und somit anderes Anzeigeelement wird ebenfalls von der Recheneinheit erzeugt. Im einfachsten Fall kann dieses alternative Anzeigeelement eine abgedunkelte Fläche sein bzw. eine solche umfassen. Denkbar ist aber auch ein grafisches alternatives Anzeigeelement, bspw. ein Muster, ein Logo o. ä., welches vordefiniert in der Recheneinheit abgelegt ist. In einer weiteren Ausgestaltung können auch vorbestimmte andere Anzeigeelemente angezeigt werden. Dabei wird bspw. ein Film, den der Beifahrer auf dem Bildschirm sieht, für den Fahrer mit einer Navigationskarte als alternatives statisches Anzeigeelement überblendet, wobei der Fahrer statt dem Film nur die Navigationskarte sieht.

Das erfindungsgemäße System ist zum Einstellen eines Bildschirms eines Fahrzeugs ausgebildet, wobei der Bildschirm für einen Beifahrer des Fahrzeugs vorgesehen und/oder diesem zugeordnet ist, wobei der Bildschirm als Beifahrerbildschirm ausgebildet ist. Das System weist eine Recheneinheit, bspw. Steuereinheit, auf. Ursprünglich wird bzw. ist vorgesehen, dass auf dem Bildschirm mindestens ein Anzeigeelement dargestellt wird, werden soll und/oder darzustellen ist. Die Recheneinheit ist dazu ausgebildet, zunächst das mindestens eine ursprünglich vorgesehene Anzeigeelement zu analysieren, bspw. zu überprüfen, und zu ermitteln, ob das mindestens eine ursprünglich vorgesehene Anzeigeelement, bspw. unter mehreren ursprünglich vorgesehenen Anzeigeelementen, nur an den Beifahrer adressiert und/oder gerichtet wird bzw. ist, wobei es entsprechend nur für den Beifahrer vorgesehen ist bzw. wird. Die Recheneinheit ist weiterhin dazu ausgebildet, den Bildschirm anzusteuern und zu veranlassen, für das mindestens eine nur für den Beifahrer vorgesehene Anzeigeelement aus einer Perspektive des Fahrers ersatzweise mindestens ein statisches Anzeigeelement auf bzw. mit dem Bildschirm darzustellen bzw. anzuzeigen, das von dem ursprünglich zur Darstellung vorgesehenen Anzeigeelement abweicht, und für den Beifahrer üblicherweise das mindestens eine ursprünglich dynamische und/oder nur für den Beifahrer vorgesehene Anzeigeelement unverändert darzustellen bzw. anzuzeigen. Die Recheneinheit ist weiterhin dazu ausgebildet, zu analysieren, mit welchem softwaregestützten Programm das mindestens eine ursprüngliche Anzeigeelement mit einem hierfür vorgesehenen Anzeigeinhalt dargestellt wird und ob dieses Programm hinsichtlich seiner Funktion zum Darstellen von privaten Anzeigeinhalten ausgebildet ist. Die Recheneinheit ist weiterhin dazu ausgebildet aufgrund des Programms zu entscheiden, ob dieser mindestens eine ursprüngliche Anzeigeinhalt nur für den Beifahrer allein vorgesehen ist.

Die Recheneinheit ist dazu ausgebildet, das mindestens eine ursprünglich darzustellende Anzeigeelement bezüglich seiner technischen Beschaffenheit und/oder bezüglich seines Anzeigeinhalts unter Nutzung von künstlicher Intelligenz zu analysieren bzw. zu untersuchen. Hinsichtlich der technischen Beschaffenheit wird von der Recheneinheit unterschieden, ob der mindestens eine Anzeigeinhalt ursprünglich dynamisch oder statisch ist.

Das System weist in Ausgestaltung den Bildschirm auf, der bezüglich einer Vorwärtsfahrtrichtung des Fahrzeugs vor einem Sitz für den Beifahrer angeordnet ist und als Beifahrerbildschirm verwendet wird.

Es ist möglich, dass eine Ausführungsform des vorgestellten Verfahrens mit einer Ausführungsform des vorgestellten Systems durchgeführt wird. Mit dem Verfahren und dem System ist eine inhaltsabhängige Einstellung und/oder Schaltung des für den Beifahrer vorgesehenen bzw. dem Beifahrer zugeordneten Bildschirm bzw. Monitor bzw. Display bzw. Anzeigefeld möglich. In Ausgestaltung ist der Bildschirm in eine Schalttafel integriert und/oder als Schalttafel ausgebildet bzw. zu bezeichnen. Dabei wird analysiert, bspw. überprüft, wie das mindestens eine ursprüngliche Anzeigeelement technisch beschaffen bzw. ausgebildet ist, wobei zwischen mindestens einem ursprünglich statischen Anzeigeelement und mindestens einem ursprünglich dynamischen Anzeigeelement hinsichtlich einer technischen Beschaffenheit unterschieden wird.

Alternativ oder ergänzend wird analysiert, für wen der Anzeigeinhalt des mindestens einen ursprünglichen Anzeigeelements vorgesehen ist, also ob er nur für den Beifahrer, jedoch nicht für den Fahrer oder für beide vorgesehen ist. Abhängig davon wird für dieses mindestens eine ursprünglich vorgesehene Anzeigeelement der Privatmodus eingestellt, wobei das mindestens eine Anzeigeelement mit dem Anzeigeinhalt in diesem Fall nur dem Beifahrer dargestellt wird, und wobei dem Fahrer dann nur ein alternatives statisches Anzeigeelement dargestellt wird, um das ursprünglich vorgesehene Anzeigeelement gegenüber dem Fahrer zu verbergen bzw. es gegenüber dem Fahrer abzuschirmen.

Falls bei dem Verfahren berücksichtigt wird, ob der Anzeigeinhalt des mindestens einen Anzeigeelements nur für den Beifahrer allein oder ggf. auch für den Fahrer vorgesehen bzw. geeignet ist, wird in Ausgestaltung untersucht bzw. analysiert, mit welchem softwaregestützten Programm bzw. mit welcher Anwendung das mindestens eine Anzeigeelement mit dem hierfür vorgesehenen Anzeigeinhalt dargestellt wird. Dabei ist es möglich, aufgrund des Programms zu entscheiden, ob dieser mindestens eine Anzeigeinhalt nur für den Beifahrer allein oder ggf. auch für den Fahrer vorgesehen ist, wobei u. a. analysiert wird, ob dieses Programm hinsichtlich seiner Funktion zum Darstellen von privaten Anzeigeinhalten ausgebildet ist. Hierbei kann es sich bspw. um ein Programm zum Darstellen von persönlichen Nachrichten bzw. Botschaften, bspw. E-Mails, und/oder um ein Programm zum Darstellen eines kommunikativen und/oder sozialen Netzwerks für unterschiedliche Nutzer handeln, wobei jeweils vertrauliche Anzeigeinhalte anzuzeigen sind. Falls als das mindestens eine Anzeigeelement bspw. ein Internetbrowser benutzt wird, wird analysiert, ob eine jeweils ausgewählte Internetseite zum Darstellen von privaten und/oder vertraulichen Anzeigeinhalten ausgebildet bzw. vorgesehen ist, wobei weiterhin berücksichtigt wird, ob diese Internetseite verschlüsselt und/oder geschützt ist und nur durch Eingabe einer Legitimation, bspw. eines Passworts, einsehbar ist. Weiterhin wird ebenfalls anhand des Programms zum Darstellen des Anzeigeinhalts überprüft, ob es bspw. als Videospieler und somit zum Darstellen bzw. Anzeigen von Videos ausgebildet ist, wobei ermittelt wird, dass der damit dargestellte Anzeigeinhalt eines jeweiligen Anzeigeelements in der Regel dynamisch ist.

Üblicherweise wird der Bildschirm von der Recheneinheit, bspw. Steuereinheit, softwaregestützt eingestellt und/oder angesteuert. Dabei wird das mindestens eine ursprünglich vorgesehene Anzeigeelement von der Recheneinheit in Ausgestaltung bereits dann hinsichtlich seiner technischen und/oder anzeigeinhaltlichen Beschaffenheit analysiert, bevor es auf dem Bildschirm, d. h. dem Beifahrerbildschirm, dargestellt wird.

In der Regel werden auf dem Bildschirm mehrere Anzeigeelemente dargestellt, wobei für jeweils ein Anzeigeelement ein Bereich bzw. ein Abschnitt auf einer Oberfläche des Bildschirms vorgesehen ist bzw. wird. Abhängig von einer Software und/oder von künstlicher Intelligenz, die von der Recheneinheit verwendet wird, wird das mindestens eine Anzeigeelement und somit der hierfür vorgesehene Bereich bzw. Abschnitt auf dem Bildschirm in den Privatmodus versetzt, wobei er lediglich für den Beifahrer in seiner ursprünglich vorgesehenen Darstellung angezeigt wird, oder nicht, wobei er sowohl für den Beifahrer als auch für den Fahrer unverändert dargestellt wird. Ein von der Recheneinheit verwendeter Algorithmus zum Einstellen von Anzeigeelementen für den Beifahrer und den Fahrer wird bspw. regelbasiert und/oder durch künstliche Intelligenz realisiert. Falls dem Fahrer statt dem ursprünglich vorgesehenen Anzeigeelement das alternative Anzeigeelement angezeigt bzw. dargestellt wird, wird das ursprünglich vorgesehene Anzeigeelement gemäß seiner ursprünglich vorgesehenen Darstellung für den Fahrer abgeschaltet und lediglich dem Beifahrer auf dem Bildschirm dargestellt.

Weiterhin wird das mindestens eine ursprünglich vorgesehene Anzeigeelement von der Recheneinheit klassifiziert, wobei es dahingehend klassifiziert wird, ob es bezüglich seiner ursprünglich vorgesehenen Darstellung auch dem Fahrer anzuzeigen ist oder nicht, wobei es im letzteren Fall dem Fahrer geändert und statisch dargestellt bzw. angezeigt wird. Dabei werden von der Recheneinheit in Ausgestaltung unterschiedliche Kriterien berücksichtigt, nach denen entschieden wird, wie das mindestens eine ursprünglich vorgesehene Anzeigeelement dem Fahrer auf dem Bildschirm dargestellt wird. Dabei betrifft ein Kriterium einen technischen Aufbau bzw. eine technische Struktur des mindestens einen Anzeigeelements, wobei analysiert wird, ob es einen statischen oder dynamischen und somit animierten Anzeigeinhalt aufweist. Gemäß einem weiteren Kriterium wird analysiert, in welcher Art von softwaregestütztem Fenster und somit mit welchem Programm und/oder welcher Verwendung bzw. Anwendung das mindestens eine Anzeigeelement dargestellt wird. Hierbei wird u. a. berücksichtigt, ob das mindestens eine Anzeigeelement bspw. in einem Video-Fenster darzustellen ist und demnach bewegte Bilder umfasst und/oder als Reklame bzw. Werbung ausgebildet ist. Gemäß einem weiteren Kriterium wird ein textlicher Inhalt des mindestens einen Anzeigeelements analysiert, wobei u. a. berücksichtigt wird, ob das mindestens eine Anzeigeelement gemäß seiner ursprünglich vorgesehenen Darstellung vertrauliche Informationen, die üblicherweise nur für den Beifahrer vorgesehen sind, umfasst. Hierbei kann auch berücksichtigt werden, ob mit dem ursprünglichen Anzeigeinhalt bspw. eine E-Mail und/oder ein Kommunikationsverlauf dargestellt wird. Als weiteres Kriterium wird die Fahrsituation des Fahrzeugs, wie voranstehend beschrieben, berücksichtigt. Gemäß einem weiteren Kriterium wird auch eine Blickrichtung des Fahrers des Fahrzeugs, üblicherweise eine Blickrichtung von mindestens einem Auge des Fahrers, sensorisch erfasst und/oder ermittelt. Bei Berücksichtigung dieses Kriteriums ist in möglicher Ausgestaltung des Verfahrens vorgesehen, dass das mindestens eine ursprünglich vorgesehene Anzeigeelement nur dann für den Fahrer geändert dargestellt wird, also durch ein alternatives statisches Anzeigeelement ersetzt wird, wenn die Blickrichtung des Fahrers in Richtung des für den Beifahrer vorgesehenen Bildschirms orientiert ist bzw. wird. Weiterhin wird als Kriterium eine Umgebungssituation des Fahrzeugs, in dem sich der Fahrer und der Beifahrer befinden, berücksichtigt. Hierbei wird u. a. eine Lichtintensität der Umgebung berücksichtigt, die bspw. davon abhängt, ob es, üblicherweise tagsüber, in der Umgebung hell oder, üblicherweise nachts, in der Umgebung dunkel ist. Unter Berücksichtigung der Lichtintensität ist es u. a. möglich, mindestens eine Farbe und/oder Helligkeit des dem Fahrer alternativ bzw. ersatzweise anzuzeigenden mindestens einen Anzeigeelements an die Umgebung anzupassen.

Das vorgestellte Verfahren kann für einen Bildschirm durchgeführt werden, der als Dual-View-Display bzw. Dual-Layer-Backlight bzw. Doppelhintergrundbeleuchtung ausgebildet ist bzw. bezeichnet wird.

Mit einem derartigen Bildschirm ist es möglich, dem Fahrer und dem Beifahrer unterschiedliche Anzeigeelemente oder dieselben Anzeigeelemente darzustellen bzw. anzuzeigen. Bei einem derartigen Bildschirm zum dualen Anzeigen von Anzeigeelementen werden die darzustellenden Anzeigeelemente dahingehend klassifiziert, ob sie ursprünglich dynamisch sind oder nicht und/oder ob sie hinsichtlich des Anzeigeinhalts nur für den Beifahrer oder ggf. auch für den Fahrer vorgesehen sind. Dabei wird das mindestens eine entsprechend klassifizierte Anzeigeelement auf einem hierfür vorgesehenen Bereich des zum dualen Anzeigen ausgebildeten Bildschirms dem Fahrer geändert und statisch angezeigt. Alternativ oder ergänzend wird das mindestens eine Anzeigeelement, unabhängig von einer konkreten Ausbildung des Bildschirms, durch ein alternatives statisches Anzeigeelement überblendet.

Mit dem Verfahren und dem System ist eine inhaltsbasierte Schaltung, bspw. Privatschaltung, von Anzeigeelementen, die ursprünglich vorgesehene bewegte Bilder umfassen, und/oder von Anzeigeelementen mit geschütztem Anzeigeinhalt, der nur für den Beifahrer vorgesehen ist, möglich. Üblicherweise sind mit dem Bildschirm zu einem Zeitpunkt mehrere Anzeigeelemente darstellbar bzw. darzustellen, wobei jedes Anzeigeelement bezüglich seiner Beschaffenheit von der Recheneinheit überprüft wird, bevor es in einem für ihn vorgesehenen Bereich bzw. Abschnitt auf dem Bildschirm dargestellt wird. Somit ist es im Fall, dass mehrere unterschiedliche Anzeigeelemente darstellbar bzw. darzustellen sind, möglich, den Bildschirm zumindest partiell in den Privatmodus zu versetzen und dabei für den Fahrer bzw. aus einer Perspektive des Fahrers Anzeigeelemente mit einem dynamischen bzw. bewegten Anzeigeinhalt und/oder Anzeigeelemente mit einem lediglich für den Beifahrer vorgesehenen Anzeigeinhalt, durch Anzeigeelemente mit einem alternativen statischen Anzeigeinhalt zu ersetzen und diese entsprechend alternativ anzuzeigen, damit der Fahrer ein entsprechendes Anzeigeelement gemäß seiner ursprünglich vorgesehenen Darstellung nicht sieht und bspw. im Fall eines bewegten Anzeigeinhalts durch diesen nicht abgelenkt wird, wenn er das Fahrzeug steuert, bspw. lenkt.

In weiterer möglicher Ausgestaltung werden sowohl eine Position mindestens eines Auges des Beifahrers relativ zu dem Bildschirm als auch eine Position mindestens eines Auges eines Fahrers des Fahrzeugs relativ zu dem Bildschirm üblicherweise sensorisch erfasst und/oder ermittelt. Außerdem wird mindestens eine optische Eigenschaft eines Sichtbereichs des Bildschirms abhängig von der Position des mindestens einen Auges des Beifahrers und des mindestens einen Auges des Fahrers üblicherweise quantitativ und automatisch eingestellt. In Ausgestaltung des Verfahrens wird der Sichtbereich bzw. eine Eyebox des Bildschirms für einen jeweiligen Betrachter, d. h. den Beifahrer und/oder den Fahrer, automatisch eingestellt. Eine Abmessung als Eigenschaft des Sichtbereichs bzw. der Eyebox weist in Ausgestaltung eine Form eines rechteckigen Pyramidenstumpfs mit rechteckiger Grundfläche, und/oder mindestens eines Lichtkegels, bspw. einer Vielzahl von Lichtkegeln, auf. Zum Einstellen der Abmessung des Sichtbereichs ist es möglich, dass ein Öffnungswinkel, unter dem Außenflächen des pyramidenstumpfförmigen Lichtkörpers relativ zueinander orientiert sind, und/oder ein Öffnungswinkel des mindestens einen Lichtkegels automatisch eingestellt, bspw. abhängig von den voranstehend beschriebenen Positionen, variiert wird bzw. werden. Hierbei wird das mindestens eine ursprüngliche Anzeigeelement, das nur für den Beifahrer vorgesehen ist, innerhalb des Sichtbereichs dargestellt und ist auch nur für mindestens ein Auge sichtbar, das sich innerhalb des Sichtbereichs, bspw. des Lichtkörpers, befindet. Außerhalb dieses Sichtbereichs ist für das mindestens eine Auge des Fahrers nur das mindestens eine ersatzweise statisch darzustellende Anzeigeelement sichtbar. Es ist möglich, dass der Sichtbereich bzw. die Eyebox durch Außenflächen des üblicherweise pyramidenstumpfförmigen Lichtkörpers begrenzt ist. In einer möglichen Ausgestaltung des Verfahrens werden die Außenflächen dieses Lichtkörpers unter Berücksichtigung der Position des mindestens einen Auges des Beifahrers und des mindestens einen Auges des Fahrers automatisch eingestellt und/oder angepasst. Hierbei ist es u. a. möglich, dass ein Öffnungswinkel, unter dem jeweils zwei Außenflächen des Lichtkörpers, die den Lichtkörper begrenzen, automatisch vergrößert oder verkleinert und somit angepasst wird. Bei einer derartigen Anpassung des Öffnungswinkel wird berücksichtigt, dass das mindestens eine Auge des Fahrers außerhalb des beschriebenen Lichtkörpers ist, wobei entsprechend vermieden wird, dass sich das mindestens eine Auge des Fahrers innerhalb des Lichtkörpers befindet.

Der Bildschirm ist dazu ausgebildet, einen ursprünglichen Anzeigeinhalt darzustellen bzw. anzuzeigen und in einen Innenraum des Fahrzeugs, bspw. eines Kraftfahrzeugs, zu emittieren. Das System weist in weiterer möglicher Ausgestaltung eine optische Zusatzschicht auf, die auf dem Bildschirm angeordnet ist und diesen abdeckt. Die optische Zusatzschicht, falls sie aktiviert ist, ist dazu ausgebildet, Zusatzlicht zu erzeugen und dieses nur in Richtung eines Fahrers des Fahrzeugs zu emittieren und das mindestens eine ursprüngliche Anzeigeinhalt des Bildschirms für den Fahrer mit dem Zusatzlicht zu überblenden und dem Fahrer stattdessen das mindestens eine ersatzweise darzustellende alternative Anzeigeelement anzuzeigen. Die Recheneinheit ist dazu ausgebildet, einen Zusatzwinkel, der einen Winkelbereich des Zusatzlichts von der optischen Zusatzschicht bezüglich der Oberfläche des Bildschirms begrenzt, kleiner als einen Blickwinkel des Fahrers einzustellen, mit dem dieser auf den Bildschirm blickt. Dabei wird das Zusatzlicht, das den ursprünglichen Anzeigeinhalt des Bildschirms überblendet und mit dem mindestens einen Anzeigeelement den alternativen Anzeigeinhalt darstellt, ausschließlich innerhalb des Winkelbereichs in Richtung des Fahrers emittiert bzw. ausgestrahlt. Ferner ist es möglich, dass der Zusatzwinkel abhängig von einem Abstand des mindestens einen Auges des Beifahrers und/oder von einem Abstand des mindestens einen Auges des Fahrers relativ zu dem Bildschirm eingestellt wird. Weiterhin ist es möglich, dass der Zusatzwinkel, mit dem das Zusatzlicht begrenzt wird, auch abhängig von einem Blickwinkel des mindestens einen Auges des Fahrers und/oder des Beifahrers eingestellt wird. Es ist möglich, dass dieser Zusatzwinkel dem voranstehend beschriebenen Öffnungswinkel des Sichtbereichs, bspw. des Lichtkörpers, entspricht.

Bei einer grafikbasierten Analyse des mindestens einen ursprünglich vorgesehenen Anzeigeelements wird u. a. untersucht, ob sich sein Anzeigeinhalt und somit das Anzeigeelement während einer definierbaren Zeitspanne, üblicherweise innerhalb einer Sekunde, grafisch ändert und somit als dynamischer Anzeigeinhalt für ein entsprechendes Anzeigeelement ausgebildet ist. Dabei ist es bspw. auch möglich, bewegte Werbung zu erkennen, die durch ein alternatives statisches Anzeigeelement ersetzt wird.

Bei einer inhaltsabhängigen Analyse des mindestens einen Anzeigeelements, die unabhängig von einer alternativen grafischen Analyse von der Recheneinheit durchgeführt wird, wird überprüft, ob mit dem mindestens einen Anzeigeelement E-Mails, bspw. vertrauliche E-Mails, für den Beifahrer darzustellen sind, ob bspw. ein soziales Medium, das für den Beifahrer vorgesehen ist, darzustellen ist, oder ob zur Darstellung einer Funktion eines Telefons ein eingehender Anruf für den Beifahrer darzustellen ist. Somit ist es möglich, das mindestens eine Anzeigeelement auf das Vorliegen eines privaten und/oder vertraulichen Anzeigeinhalts für den Beifahrer zu untersuchen, wobei das Anzeigeelement für den Fahrer durch ein alternatives Anzeigeelement ersetzt wird.

In Ausgestaltung ist es möglich, dass von der Recheneinheit bei einer Analyse des mindestens einen ursprünglich vorgesehenen Anzeigeelements nach digitalen und/oder optischen Markierungen auf dem mindestens einen Anzeigeelement gesucht wird, wobei derartige Markierungen auch in einem Video bzw. Videostream als Anzeigeelement, bspw. Anzeigeinhalt, vorgesehen sein können.

Üblicherweise wird das Verfahren für den kompletten bzw. gesamten Bildschirm durchgeführt, wobei sämtliche Anzeigeelemente von der Recheneinheit bezüglich ihrer Beschaffenheit analysiert werden. Falls lediglich ein Anzeigeelement ursprünglich darzustellen ist, das dynamisch und/oder nur für den Beifahrer vorgesehen ist, wird lediglich dieses eine Anzeigeelement durch das für den Fahrer vorgesehene alternative statische Anzeigeelement ersetzt, wobei in diesem Fall dieses alternative statische Anzeigeelement auf dem kompletten Bildschirm dargestellt wird. Falls nur einige Anzeigeelemente unter mehreren Anzeigeelementen dynamisch und/oder nur für den Beifahrer vorgesehen sind, werden lediglich diese Anzeigeelemente auf dem Bildschirm für den Fahrer durch alternative statische Anzeigeelemente ersetzt. In diesem Fall wird der Bildschirm nur teilweise für den Fahrer durch Darstellung von alternativen Anzeigeelementen angepasst. Falls vorgesehen ist, dass das mindestens eine alternative Anzeigeelement monochrom, bspw. schwarz, ist, wird der Bildschirm für den Fahrer bzw. ausgehend von seiner Perspektive nur teilweise monochrom, bspw. schwarz, geschaltet.

Sämtliche ursprünglich statischen und somit nicht bewegten Anzeigeelemente, wie bspw. eine Statuszeile, ein Bedienelement, eine Uhrzeit und/oder weitere Informationen, werden sowohl dem Beifahrer als auch dem Fahrer gemäß ihrer ursprünglich vorgesehenen Darstellung angezeigt, unabhängig davon, ob mindestens ein weiteres ursprünglich vorgesehenes Anzeigeelement für den Fahrer durch ein alternatives Anzeigeelement ersetzt wird oder nicht. Somit ist es möglich, einen optischen Gesamteindruck des Bildschirms besser zu erhalten, da bspw. große schwarze Flächen, die lediglich dem Fahrer dargestellt werden, vermieden werden. Eine im Rahmen des Verfahrens vorgesehene Privatschaltung wird von der Recheneinheit automatisch nur für relevante Anzeigeelemente bzw. entsprechende Bildbereiche des Bildschirms durchgeführt.

In Ausgestaltung wird der Bildschirm abhängig von der Beschaffenheit der darauf jeweils darzustellenden Anzeigeelemente nur teilweise in den privaten Modus geschaltet bzw. versetzt. Dabei werden dem Fahrer sowohl ursprünglich vorgesehene Anzeigeelemente als auch alternative statische Anzeigeelemente dargestellt. Dabei wird bspw. eine Verknüpfung zwischen einem von der Recheneinheit erkannten privaten Anzeigeinhalt, der lediglich für den Beifahrer vorgesehen ist, innerhalb sämtlicher darstellbarer Anzeigeelemente und einer technischen Privatschaltung dieses Anzeigeinhalts berücksichtigt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

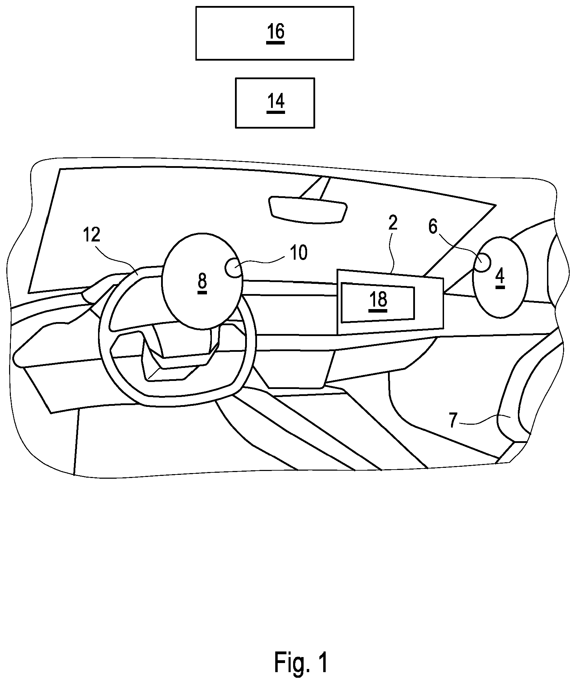

Figur 1 zeigt in schematischer Darstellung eine Ausführungsform des erfindungsgemäßen Systems zum Durchführen einer Ausführungsform des erfindungsgemäßen Verfahrens.

Figur 1 zeigt in schematischer Darstellung einen Innenraum eines hier als Kraftfahrzeug ausgebildeten bzw. zu bezeichnenden Fahrzeugs, in dem auf einem nicht weiter dargestellten Sitz bzw. Fahrersitz hinter einem Lenkrad 12 auf einer Fahrerseite ein Fahrer mit einem Kopf 8 sitzt, von dem hier ein Auge 10 schematisch dargestellt ist. Neben dem Lenkrad auf einer Beifahrerseite sitzt auf einem weiteren Sitz 7 bzw. Beifahrersitz ein Beifahrer, von dem hier dessen Kopf 4 und ein Auge 6 schematisch dargestellt sind. Hierbei ist vorgesehen, dass der Sitz 7 für den Beifahrer und somit auch der darauf sitzende Beifahrer hinter einem Bildschirm 2 bzw. Display angeordnet sind, wobei dieser Bildschirm 2 üblicherweise für den Beifahrer vorgesehen und diesem auch zur Einsicht eines Anzeigeinhalts auf dem Bildschirm 2 zugeordnet ist.

Das erfindungsgemäße System weist einen Sensor 14 und eine Recheneinheit 16 auf, die in Figur 1 schematisch dargestellt sind. Hierbei ist es optional möglich, dass auch der Bildschirm 2 als eine Komponente dieses Systems ausgebildet ist.

Bei der Ausführungsform des erfindungsgemäßen Verfahrens ist bzw. wird ursprünglich vorgesehen, dass auf dem Bildschirm mindestens ein Anzeigeelement 18 dargestellt wird bzw. werden soll. Dabei wird das mindestens eine ursprünglich vorgesehene Anzeigeelement 18 von der Recheneinheit 16 analysiert, bspw. überprüft, und weiterhin ermittelt, ob das mindestens eine ursprünglich vorgesehene Anzeigeelement hinsichtlich seiner technischen Beschaffenheit dynamisch und/oder animiert ist und üblicherweise bewegte Bilder umfasst. Alternativ oder ergänzend wird von der Recheneinheit 16 analysiert, bspw. überprüft, und weiterhin ermittelt, ob das ursprünglich vorgesehene Anzeigeelement 18 hinsichtlich seiner inhaltlichen Beschaffenheit nur an den Beifahrer gerichtet wird bzw. ist und/oder nur für den Beifahrer vorgesehen ist bzw. wird. Abhängig von einer jeweiligen Beschaffenheit wird der Bildschirm 2 von der Recheneinheit 16 angesteuert und veranlasst, dass für das mindestens eine ursprünglich vorgesehene dynamische und/oder nur für den Beifahrer vorgesehene Anzeigeelement 18 aus einer Perspektive des Fahrers ersatzweise mindestens ein statisches Anzeigeelement dargestellt wird, und wobei für den Beifahrer das mindestens eine ursprünglich dynamische und/oder nur für den Beifahrer vorgesehene Anzeigeelement unverändert dargestellt wird. Das für den Fahrer bzw. aus dessen Perspektive ersatzweise bzw. alternativ dargestellte Anzeigeelement, das von dem ursprünglich darzustellenden Anzeigeelement abweicht, kann bspw. ein Bild aufweisen.

Bei Ausführung des Verfahrens ist es möglich, dass der Fahrer zumindest während einer Fahrt, wenn er das Fahrzeug steuert und mit dem Lenkrad 12 lenkt, durch den Anzeigeinhalt auf dem Bildschirm 2 nicht abgelenkt wird, dass der Beifahrer diesen Anzeigeinhalt auf dem Bildschirm 2 aber dennoch einsehen kann.

Hierzu ist bei dem Verfahren in möglicher Ausgestaltung vorgesehen, dass von dem Sensor 14 eine Position mindestens eines Auges 10, in der Regel beider Augen 10, des Fahrers und/oder eine Position mindestens eines Auges 6, in der Regel beider Augen 6, des Beifahrers relativ zu dem Bildschirm 2 erfasst und/oder ermittelt wird. Hierbei wird auch eine Blickrichtung und somit ein Blickwinkel des mindestens einen Auges 6, 10 relativ zu dem Bildschirm 2 berücksichtigt. Falls von dem Sensor 14 und/oder der Recheneinheit 16 ermittelt wird, dass der Abstand des mindestens einen Auges 10 des Fahrers zu dem Bildschirm 2 geringer als ein hierfür vorgesehener Schwellwert ist, und/oder dass die Blickrichtung des mindestens einen Auges 10 des Fahrers zu dem Bildschirm 2 orientiert ist, wird der ursprünglich vorgesehene Anzeigeinhalt, wie voranstehend beschrieben, ersetzt. Dabei wird ein Privatmodus bzw. Blickschutz für den ursprünglich vorgesehenen Anzeigeinhalt gegenüber dem Fahrer bereitgestellt.

### BEZUGSZEICHEN:

- 2: Bildschirm
- 4: Kopf
- 6: Auge
- 7: Sitz
- 8: Kopf
- 10: Auge
- 12: Lenkrad
- 14: Sensor
- 16: Recheneinheit
- 18: Anzeigeelement

## Patentansprüche

1. Verfahren zum Einstellen eines Bildschirms (2) eines Fahrzeugs, wobei der Bildschirm (2) für einen Beifahrer des Fahrzeugs vorgesehen ist, wobei ursprünglich vorgesehen wird, dass auf dem Bildschirm (2) mindestens ein Anzeigeelement (18) dargestellt wird, **dadurch gekennzeichnet, dass** das mindestens eine Anzeigeelement (18) analysiert wird, wobei ermittelt wird, ob das mindestens eine Anzeigeelement (18) nur für den Beifahrer vorgesehen wird, wobei für das mindestens eine nur für den Beifahrer vorgesehene Anzeigeelement (18) aus einer Perspektive des Fahrers ersatzweise mindestens ein statisches von dem ursprünglich zur Darstellung vorgesehenen Anzeigeelement (18) abweichendes Anzeigeelement dargestellt wird, wobei analysiert wird, mit welchem softwaregestützten Programm das mindestens eine ursprüngliche Anzeigeelement (18) mit einem hierfür vorgesehenen Anzeigeinhalt dargestellt wird, wobei analysiert wird, ob dieses Programm hinsichtlich seiner Funktion zum Darstellen von privaten Anzeigeinhalten ausgebildet ist, wobei aufgrund des Programms zu entscheiden ist, ob dieser mindestens eine ursprüngliche Anzeigeinhalt (18) nur für den Beifahrer allein vorgesehen ist.

2. Verfahren nach Anspruch 1, bei dem das mindestens eine ursprünglich darzustellende Anzeigeelement (18) grafikbasiert erkannt wird.

3. Verfahren nach Anspruch 1 oder 2, bei dem das mindestens eine ursprünglich darzustellende Anzeigeelement (18) fensterbasiert erkannt wird.

4. Verfahren nach einem der voranstehenden Ansprüche, bei dem mindestens ein Anzeigeelement (18) dem Beifahrer wie ursprünglich vorgesehen dargestellt wird.

5. Verfahren nach einem der voranstehenden Ansprüche, bei dem eine Fahrsituation des Fahrzeugs berücksichtigt wird.

6. Verfahren nach einem der voranstehenden Ansprüche, wobei es sich um ein Programm zum Darstellen von persönlichen Nachrichten handelt, wobei jeweils vertrauliche Anzeigeinhalte anzuzeigen sind.

7. Verfahren nach einem der voranstehenden Ansprüche, bei dem für den Fall, dass als das mindestens eine Anzeigeelement (18) ein Internetbrowser benutzt wird, analysiert wird, ob eine jeweils ausgewählte Internetseite zum Darstellen von privaten und/oder vertraulichen Anzeigeinhalten ausgebildet ist, wobei berücksichtigt wird, ob diese Internetseite verschlüsselt ist und nur durch Eingabe einer Legitimation einsehbar ist.

8. System zum Einstellen eines Bildschirms (2) eines Fahrzeugs, wobei der Bildschirm (2) für einen Beifahrer des Fahrzeugs vorgesehen ist, wobei das System eine Recheneinheit (16) aufweist, wobei ursprünglich vorgesehen ist, dass auf dem Bildschirm (2) mindestens ein Anzeigeelement (18) darzustellen ist, **dadurch gekennzeichnet, dass** die Recheneinheit (16) dazu ausgebildet ist, das mindestens eine Anzeigeelement (18) zu analysieren und zu ermitteln, ob das mindestens eine Anzeigeelement (18) nur für den Beifahrer vorgesehen ist, wobei die Recheneinheit (16) dazu ausgebildet ist, für das mindestens eine nur für den Beifahrer vorgesehene Anzeigeelement (18) aus einer Perspektive des Fahrers ersatzweise auf dem Bildschirm (2) mindestens ein statisches von dem ursprünglich zur Darstellung vorgesehenen Anzeigeelement (18) abweichendes Anzeigeelement darzustellen, wobei wobei die Recheneinheit weiterhin dazu ausgebildet ist, zu analysieren, mit welchem softwaregestützten Programm das mindestens eine ursprüngliche Anzeigeelement (18) mit einem hierfür vorgesehenen Anzeigeinhalt dargestellt wird, und ob dieses Programm hinsichtlich seiner Funktion zum Darstellen von privaten Anzeigeinhalten ausgebildet ist, wobei die Recheneinheit dazu ausgebildet ist aufgrund des Programms zu entscheiden, ob dieser mindestens eine ursprüngliche Anzeigeinhalt (18) nur für den Beifahrer allein vorgesehen ist.

9. System nach Anspruch 8, bei dem die Recheneinheit (16) dazu ausgebildet ist, das mindestens eine ursprünglich darzustellende Anzeigeelement (18) unter Nutzung von künstlicher Intelligenz zu analysieren.

10. System nach Anspruch 8 oder 9, das den Bildschirm (2) aufweist, der bezüglich einer Vorwärtsfahrtrichtung des Fahrzeugs vor einem Sitz (7) für den Beifahrer angeordnet ist.

## Claims

1. A method for adjusting a screen (2) of a vehicle, wherein the screen (2) is provided for a passenger of the vehicle, wherein it is originally provided that at least one display element (18) is shown on the screen (2), **characterized in that** the at least one display element (18) is analyzed, wherein it is determined whether the at least one display element (18) is provided only for the passenger, wherein for the at least one display element (18) provided only for the passenger, from a perspective of the driver, at least one static display element that is different from the display element (18) originally provided for showing is shown as a substitute, wherein it is analyzed with which software-supported program the at least one original display element (18) is shown with a display content provided therefor, wherein it is analyzed whether this program, with regard to its function, is configured for showing private display content, wherein it is to be decided on the basis of the program whether this at least one original display content (18) is only provided for the passenger alone.

2. The method according to claim 1, in which the at least one display element (18) to be originally shown is recognized based on graphics.

3. The method according to claim 1 or 2, in which the at least one display element (18) to be originally shown is recognized based on windows.

4. The method according to any of the preceding claims, in which at least one display element (18) is shown to the passenger as originally provided.

5. The method according to any of the preceding claims, in which a driving situation of the vehicle is taken into account.

6. The method according to any of the preceding claims, in which the program being designed for showing personal messages, wherein respectively confidential display contents are to be shown.

7. The method according to any of the preceding claims, in which, in the event that an Internet browser is used as the at least one display element (18), it is analyzed whether a respectively selected Internet page is configured for displaying private and/or confidential display contents, wherein it is taken into account whether this Internet page is encrypted and can only be viewed by entering a legitimation.

8. A system for adjusting a screen (2) of a vehicle, wherein the screen (2) is provided for a passenger of the vehicle, wherein the system has a computing unit (16), wherein it is originally provided that at least one display element (18) is to be shown on the screen (2), **characterized in that** the computing unit (16) is configured to analyze the at least one display element (18) and to determine whether the at least one display element (18) is provided only for the passenger, wherein the computing unit (16) is configured to show, from a perspective of the driver, as a substitute for the at least one display element (18) provided only for the passenger, at least one static display element on the screen (2), that is different from the display element (18) originally provided for showing, wherein the computing unit is further configured to analyze with which software-supported program the at least one original display element (18) is shown with a display content provided therefor, and whether this program is configured, with regard to its function, for showing private display content, wherein the computing unit is configured to decide on the basis of the program whether this at least one original display content (18) is only provided for the passenger alone.

9. The system according to claim 8, in which the computing unit (16) is configured to analyze, using artificial intelligence, the at least one display element (18) to be originally shown.

10. The system according to claim 8 or 9, having the screen (2) which is arranged, with respect to a forward driving direction of the vehicle, in front of a seat (7) for the passenger.

## Revendications

1. Procédé pour régler un écran (2) d'un véhicule, l'écran (2) étant prévu pour un passager avant du véhicule, la disposition initiale prévoyant qu'au moins un élément d'affichage (18) s'affiche sur l'écran (2), **caractérisé en ce que** le au moins un élément d'affichage (18) est analysé, ce qui permet de déterminer si le au moins un élément d'affichage (18) est prévu uniquement pour le passager avant, dans lequel, pour le au moins un élément d'affichage (18) prévu uniquement pour le passager avant, au moins un élément d'affichage statique différent de l'élément d'affichage (18) initialement prévu pour l'affichage est affiché à la place, du point de vue du conducteur, en analysant quel programme informatique est utilisé pour afficher au moins un élément d'affichage (18) initial avec un contenu d'affichage prévu à cet effet, en analysant si ce programme est conçu pour afficher des contenus d'affichage privés, en décidant, sur la base du programme, si ce contenu d'affichage (18) initial est destiné uniquement au passager avant.

2. Procédé selon la revendication 1, dans lequel le au moins un élément d'affichage (18) à afficher initialement est reconnu sur la base d'un graphique.

3. Procédé selon la revendication 1 ou 2, dans lequel le au moins un élément d'affichage (18) à afficher initialement est reconnu sur la base d'une fenêtre.

4. Procédé selon l'une des revendications précédentes, dans lequel au moins un élément d'affichage (18) est présenté au passager avant comme initialement prévu.

5. Procédé selon l'une des revendications précédentes, dans lequel une situation de conduite du véhicule est prise en compte.

6. Procédé selon l'une des revendications précédentes, dans lequel il s'agit d'un programme destiné à afficher des messages personnels, les contenus à afficher étant respectivement confidentiels.

7. Procédé selon l'une des revendications précédentes, analysant, dans le cas où un navigateur Internet est utilisé comme le au moins un élément d'affichage (18), si une page Internet sélectionnée est conçue pour afficher des informations privées et/ou confidentielles, en tenant compte du fait que cette page Internet est cryptée et n'est accessible qu'après saisie d'une authentification.

8. Système pour régler un écran (2) d'un véhicule, l'écran (2) étant prévu pour un passager avant du véhicule, le système comportant une unité de calcul (16), la disposition initiale prévoyant qu'au moins un élément d'affichage (18) s'affiche sur l'écran (2), **caractérisé en ce que** l'unité de calcul (16) est conçue pour analyser le au moins un élément d'affichage (18) et déterminer si le au moins un élément d'affichage (18) est prévu uniquement pour le passager avant, l'unité de calcul (16) étant conçue pour afficher à la place sur l'écran (2), du point de vue du conducteur, pour le au moins un élément d'affichage (18) prévu uniquement pour le passager avant, au moins un élément d'affichage statique différent de l'élément d'affichage (18) initialement prévu pour l'affichage, l'unité de calcul étant en outre conçue pour analyser quel programme informatique est utilisé pour afficher le au moins un élément d'affichage (18) initial avec un contenu d'affichage prévu à cet effet, et si ce programme, au regard de sa fonction, est conçu pour afficher des contenus d'affichage privés, l'unité de calcul étant conçue pour décider, sur la base du programme, si ce au moins un contenu d'affichage (18) initial est prévu uniquement pour le passager avant.

9. Système selon la revendication 8, dans lequel l'unité de calcul (16) est conçue pour analyser le au moins un élément d'affichage (18) à afficher initialement, à l'aide de l'intelligence artificielle.

10. Système selon la revendication 8 ou 9, présentant l'écran (2) qui est disposé, par rapport à un sens de marche avant du véhicule, devant un siège (7) pour le passager avant.
